# EUROPEAN PATENT APPLICATION

(11) **EP 1 513 099 A1**
(43) Date of publication of application: **09.03.2005**
(21) Application number: 03292334.4
(22) Date of filing: 24.09.2003
(51) Int. Cl.: G06K 19/077

(54) **Thin flexible display used as full card layer**

(30) Priority: 28.08.2003 EP 03292126
(71) Applicant: Axalto S.A., 92120 Montrouge (FR)
(72) Inventor: Deloche, Manuel, Schlumberger Systèmes, 92120 Montrouge (FR)

(57) **Abstract**

A card like object comprising card body, the card body being made of plastic material, wherein a display in the form of a layer is inserted in the card body, the display comprising a first face and a second face, the first and second face comprising a polymeric material.

## Description

The invention concerns any laminated cardbody.

Some particularly interesting technologies involve fully polymeric displays, or displays that present 2 external layers of a polymeric material (like PET for instance). More and more displays are very thin, flexible and become compatible with low cost manufacturing processes like roll-to-roll manufacturing.

The advantages of polymers are that they are thin, flexible, low cost and more durable than glass.

### Different technologies exists

Plastic Substrate LCDs (before it was a glass substrate)
Flat-panel Displays
PLED
EP
OLED (Organic Light Emitting Diode)

And some manufacturers move to a thin glass-polymer substrate able to take the best properties of both polymers (mechanically resistant, bendable) and glass (excellent barrier against moisture and oxygen).

Some technologies require a full-time energy source to display information, others don't and characters or pictograms stay visible unless changed (called bi-stable) when inserted into a reader.

A display could show account balance, cardholder photo (ID, Access), commercial messages, e-purse balance, number of validation( mass transit)...

It is difficult to integrate conductive circuits into card bodies and connect them to an IC module or a chip, especially if the number of connections is greater than 2.

### Here is the classic card structure presenting a display and an IC module:

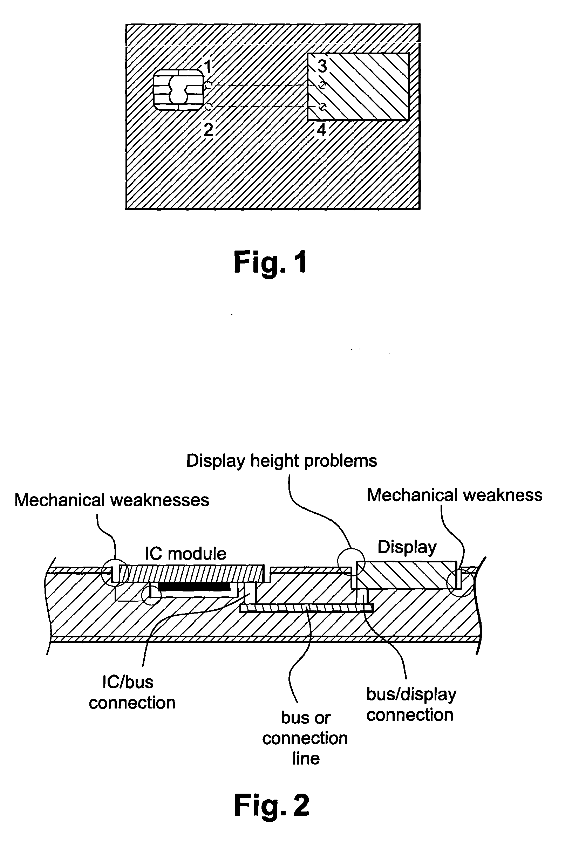

As illustrated in figure 1 and 2, an IC module is connected to the display via at least 2 connection lines (bus for instance). So at least 4 contacts are needed and display is embedded with same technology as the IC module.

### See figures 1 and 2

### Classic solution drawbacks:

- An embedding process (like for IC module) is needed twice with 2 different sets of tools
- milling a second cavity for the display introduces another source of mechanical failures (as for IC module)
- A link (similar to etched antennas for instance) is needed and make the card construction more difficult
- Such a solution requires at least 4 connections (see picture above); so the sources of electrical failures is doubled.
- The embedded display height will have to comply with the same ISO standards as the IC module.

Such a complex construction will certainly have durability problems on the field (connection with bus, display unglued, card fractured or cracked...), not mentioning that its manufacturability will be difficult and costly due to the excessive number of operations and to the specific tools required(display punching, pick&place, embedding etc...).

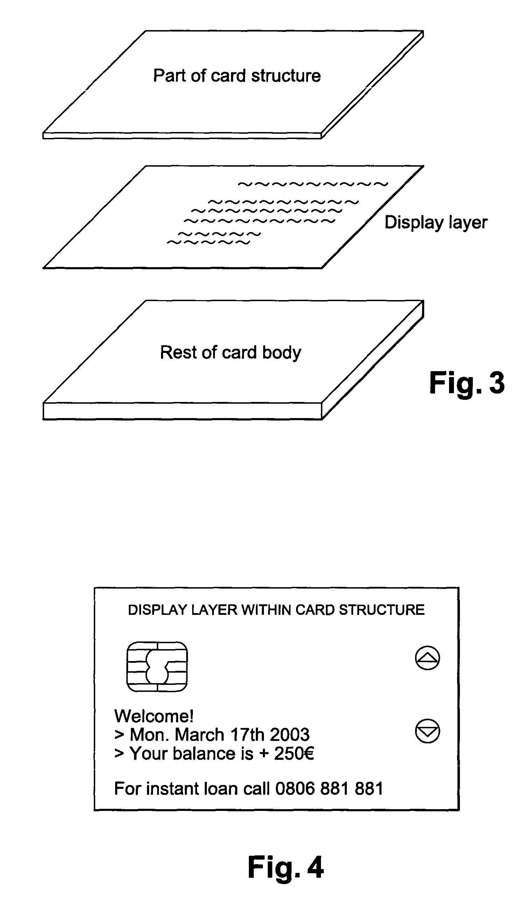

As illustrated in figure 3, contrary to classic displays placed on a finished or machined card body, this active component (the display) can be inserted directly within the card structure before it is laminated. The chip or IC module can be placed afterwards and connected to the display layer by any mean (silver glue, anisotropic module bonding glue for instance) when embedded into the card body.

This structure only calls for well-known and controlled manufacturing processes.

As illustrated in figure 4, according to another aspect of the invention, buttons can also be added to ensure interactivity between the cardholder and the smart card.

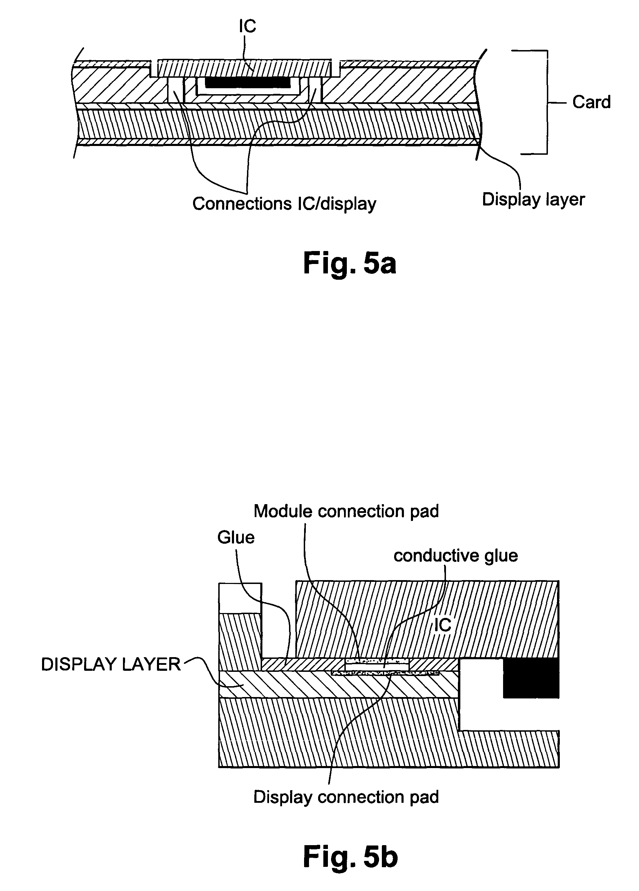

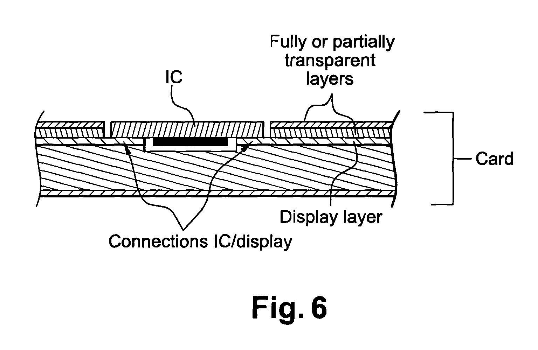

See figures 3, 4, 5a, 5b, 6.

### Advantages:

■ Display is tightly integrated within the card body since it is laminated with other layers, and isn't a device placed in the card afterwards. Display can't "pop-up".
■ No specific milling/embedding operation is necessary to place the display on the card.
■ Display can be processed in sheets (like antennas for contactless or dual-interface cards). Then cards are punched as usual before milling and module embedding. It only calls for traditional and well-known layer assembly and embedding processes
■ No additional mechanical weakness is introduced by integrating a display.
■ No additional constraint is introduced (display positioning tolerance, display height VS ISO stanadards...)
■ No need to have a layer of circuitry to make the connection between the IC module and the display.
■ If required the display layer can be printed as a regular card layer such as PET. It may be useful for creating clear/opaque zones.
■ This technology can be nearly immediately implemented at a low cost!
■ The full surface of the card can show various information, can be completely animated, show blinking logos etc...

### Possible alternatives with respect to the practical example.

The display layer can be used as card backside (opposite to IC module side) overlay and be connected as shown on picture N°5.

The invention hereinbefore illustrates a card like object comprising card body, the card body being made of plastic material, wherein a display in the form of a layer is inserted in the card body, the display comprising a first face and a second face, the first and second face comprising a polymeric material.
According to another aspect of the invention, the display is in the form of a layer covering substantially all the surface of the card like object.
According to another aspect of the invention, the display is a fully polymeric display.
According to another aspect of the invention, the display comprises a glass-polymer based material.
According to another aspect of the invention, the display is inserted in the card body using a laminating process.
According to another aspect of the invention, wherein the card body further comprises an integrated circuit embedded in cavity, the display being connected to the integrated circuit using connecting means.
According to another aspect of the invention, the cavity has an opening flush with the surface of the card-like object.
According to another aspect of the invention, the card like object is a smart card.
According to another aspect of the invention, the display is bi-stable.
According to another aspect of the invention, a battery in the form of a layer is embedded in the card body, the thickness being less than 300 µm.

## Claims

1. A card like object comprising card body, the card body being made of plastic material, wherein a display in the form of a layer is inserted in the card body, the display comprising a first face and a second face, the first and second face comprising a polymeric material.

2. The card like object according to claim 1, wherein the display is in the form of a layer covering substantially all the surface of the card like object.

3. The card like object according to claim 1, wherein the display is a fully polymeric display.

4. The card like object according to claim 1, wherein the display comprises a glass-polymer based material.

5. The card like object according to claim 1, wherein the display is inserted in the card body using a laminating process.

6. The card like object according to claim 1, wherein the card body further comprises an integrated circuit embedded in cavity, the display being connected to the integrated circuit using connecting means.

7. The card like object according to claim 1, wherein the cavity has an opening flush with the surface of the card-like object.

8. The card like object according to claim 1, wherein the card like object is a smart card.

9. The card like object according to claim 1, wherein the display is bi-stable.

10. The card like object according to claim 1, wherein a battery in the form of a layer is embedded in the card body, the thickness being less than 300 µm.
